(19) Europäisches Patentamt
European Patent Office
Office européen des brevets

(11) EP 2 089 483 B2

(12) NEW EUROPEAN PATENT SPECIFICATION
After opposition procedure

(45) Date of publication and mention of the opposition decision:
**25.11.2015 Bulletin 2015/48**

(45) Mention of the grant of the patent:
**04.08.2010 Bulletin 2010/31**

(21) Application number: **07862503.5**

(22) Date of filing: **04.12.2007**

(51) Int Cl.:
***B05D 7/00*** (2006.01) ***C08G 18/62*** (2006.01)
***C08G 18/73*** (2006.01) ***C08G 18/28*** (2006.01)
***C09D 133/06*** (2006.01) ***C09D 167/07*** (2006.01)

(86) International application number:
**PCT/US2007/024833**

(87) International publication number:
**WO 2008/070077 (12.06.2008 Gazette 2008/24)**

# (54) COATING MATERIAL CONTAINING A MIXTURE OF MINERAL SILICATES AND DIUREA

BESCHICHTUNGSZUSAMMENSETZUNG MIT EINER MISCHUNG AUS MINERALISCHEN SILIKATEN UND DIHARNSTOFF

MATÉRIAU DE REVÊTEMENT CONTENANT UN MÉLANGE DE SILICATES MINÉRAUX ET DIURÉE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **04.12.2006 US 872673 P**

(43) Date of publication of application:
**19.08.2009 Bulletin 2009/34**

(73) Proprietor: **Coatings Foreign IP Co. LLC**
**Wilmington, DE 19801 (US)**

(72) Inventors:
- **TRINDADE, Delson Jayme**
  **Rochester Hills, MI 48306 (US)**
- **MATHESON, Robert R.**
  **Glen Allen, Virginia 23059 (US)**

(74) Representative: **Maiwald Patentanwalts GmbH**
**Engineering**
**Elisenhof**
**Elisenstrasse 3**
**80335 München (DE)**

(56) References cited:
**US-A- 4 311 622** **US-A1- 2003 176 568**
**US-B1- 6 607 788**

- **DATABASE WPI Week 199831 Thomson Scientific, London, GB; AN 1998-357727 XP002518621 & JP 10 140083 A (NIPPON PAINT CO LTD) 26 May 1998 (1998-05-26)**
- **DATABASE WPI Week 198117 Thomson Scientific, London, GB; AN 1981-29736D XP002518622 & JP 56 022363 A (MITSUI TOATSU CHEM INC) 2 March 1981 (1981-03-02)**
- **ROCKWOOD: 'the performance enhancer' LAPONITE 13 July 2006,**
- **D.J. MANIA, ET AL.: 'Sources of error in VOC - Determination via EPA method 24' JOURNAL OF COATING TECHNOLOGY vol. 73, no. 919, August 2001, pages 111 - 117**

EP 2 089 483 B2

## Description

### FIELD OF THE INVENTION

This invention relates to a coating composition. Furthermore, the present specification describes a method of applying multi-layer coating films onto an automotive body or part thereof. In particular, this specification describes to a method of forming multi-layer coating films by baking wet layers of a primer, basecoat, and clearcoat layers at the same time.

### BACKGROUND OF THE INVENTION

Conventional coating systems for automobiles typically comprise multiple coating layers applied to a substrate. For example, a substrate is typically treated with a rustproofing phosphate layer, followed by application of a cathodic electrocoat primer for additional corrosion protection. A primer surfacer (known alternatively as "a chip resistant primer", "primer", or "primer filler") is used next to smooth the surface for topcoating and also to provide stone chip resistance to the coating system during the normal course of driving, followed by a top coat system. The top coat system can be a single colored coat, but more often it is an applied basecoat having solid color and/or flake pigments followed by an applied transparent protective clearcoat which functions to protect and preserve the attractive aesthetic qualities of the finish on the vehicle.

The basecoat and clearcoat compositions are normally applied as a "wet-on-wet" application to a layer of cured and dried primer. It can be optional to remove a portion of the solvent from the basecoat before the clearcoat is applied. The basecoat and clearcoat layers are subsequently baked at the same time to form a dried and cured finish. Cured primers have been used not only to provide a smooth surface on which to apply the topcoat, but also to also prevent interfacial bleeding or intermixing with the overlying basecoat and avoid disrupting the appearance of the overall topcoat finish. Resistance to intermixing, sometimes referred to as "strike-in" resistance, is especially important for the appearance of glamour metallic finishes which are popular on automobiles and trucks. Any disturbance of the metallic pigment flake orientation in metallic basecoats after application over the primer-surfacer will detract from the metallic effect of the finish.

If a paint applied to a substrate contains a metallic effect pigment, the flop index of the dried and cured paint is an important measure of quality. It is important for the metallic effect pigments to orient parallel to the underlying surface to maximize the flop. Generally, basecoats are applied in two thin layers which help to facilitate the orientation of the metallic flake parallel to the underlying surface. When a majority of the metallic flakes are oriented parallel to the underlying surface, the flop, or brightness change on viewing angle is maximized resulting in a highly desirable effect. To apply two thin layers, an automobile paint facility typically employees a series of two separate spray stations one positioned directly after the other. Since each spray station may use several spray guns, the capital investment for the basecoat spray booth can be significant.

It can be desirable to reduce the environmental impact of automotive assembly plants by reducing VOC (volatile organic compounds) emissions and $CO_2$ (carbon dioxide) emissions generated from operating painting booths and baking ovens. Use of lower solvent content in the paint and the development of three-layer wet paint systems make it possible to apply a primer surfacer, basecoat and clearcoat "wet-on-wet-on-wet" continuously before they are cured all at once in a single bake. Such a simplified "3-wet" application process allows for elimination of a separate primer oven. The process is not trouble-free, however. For instance, interfacial bleeding and aesthetic appearance, as well as film properties such as chip resistance are still significant concerns.

Attempts have been made to address the forgoing problems by modifying the formulation of the primer coating material. For example, U.S. Patent No. 6,863,929 of Watanabe et al. describes a method for forming a multilayer automotive coating film using a three layer wet paint process (also referred to as a "3-wet" or a "3-coat-1-bake" process).

However, use of microparticles can allow intermixing, resulting in defects in the aesthetic appearance such as loss of smoothness, gloss, head on brightness, and/or metallic effect Sagging of these coatings, especially on vertical panels, such as doors, fenders, and rocker panels can be a problem. Thinning of the film may subject the underlying corrosion-protective electrocoated primer layer to excessive UV light transmission and deterioration. Thin films or thin film regions are also inadequate for mechanical properties and visual appearance of the overall finish.

It can be desirable to apply primer surfacer, basecoat, and clearcoat layers to a substrate before any of the layers has completely dried. There is a need to prevent the intermixing of the primer surfacer and basecoat and clearcoat layers in such a process, to obtain commercially viable coatings.

JP 10140083 A discloses a paint composition comprising an acryl polyol, a polyisocyanate compound, a silicate compound and a hydrophilizing agent.

JP 56022363 A discloses polyurethane elastic coating agent comprising (1) nonaromatic polyisocyanate or its prepolymer, (2) acrylic polyol and (3) finely granular silicic acid or silicate.

Neither JP 10140083 A nor JP 56022363 A discloses or suggests a coating composition comprising crosslinkable and crosslinking components, at least one diurea compound as well as at least one layered silicate material.

Applicants have filed a copending application PCT/US2007/024832 (WO 2008/070076 A2). The examples comprised therein disclose basecoat compositions comprising crosslinkable and crosslinking components, diurea compound as well as layered silicate.

## SUMMARY OF THE INVENTION

In one aspect, the present invention is a coating composition comprising a metallic effect pigment, a crosslinkable component, a crosslinking component, at least one diurea and at least one layered silicate mineral.

The present specification also describes a process comprising the streps:

1. a) applying a layer of a primer composition to a substrate;
2. b) optionally flashing the layer of primer composition to remove a portion of solvent;
3. c) applying a layer of a basecoat composition to said substrate;
4. d) optionally flashing the layer of basecoat composition to remove a portion of solvent;
5. e) applying wet-on-wet over said basecoat composition a layer of a clearcoat composition; and
6. f) heating the substrate and applied layers at a temperature in the range of from 60°C to 200°C for 60 seconds to 60 minutes to provide a substantially dried and cured coated substrate,

   wherein said basecoat composition comprises crosslinkable component, a crosslinking component, at least one diurea, and at least one layered silicate mineral. Wherein «substantially dried» means that the cured composition contains less than 1 percent by weight of solvent, based on the total weight of the composition.

## DETAILED DESCRIPTION OF THE INVENTION

In this disclosure, a number of terms and abbreviations are used. The following definitions are provided.

"Wet-on-wet" means that the basecoat layer and clearcoat layer are applied successively to a cured primer layer without a curing step in between the basecoat and clearcoat layers.

"Wet-on-wet-on-wet", also used interchangeably herein with "3-wet", and "3-coat-1-bake", means that the primer layer, basecoat layer, and clearcoat layer are applied successively without a curing step in between each layer.

"Substantially dried" with respect to the coating composition mean that the coating composition contains less than 1 percent by weight, preferably zero percent by weight, of solvent, based on the total weight of the composition.

"High solids composition" means a liquid coating composition having a total solids content at time of application of at least 40 percent, preferably in the range of from 40-90 percent, in weight percentages based on the total weight of the composition.

"Total solids" refers to the total amount of non-volatile components in the composition even though some of the components may be non-volatile liquids rather than solids at room temperature.

In this disclosure, the term "binder" or "binder solids" refers to the film-forming polymer, the crosslinking agent, and all other optional film-forming components. The binder generally includes all the film-forming components that contribute to the solid organic portion of the cured composition. Generally, catalysts, pigments, and non-polymeric chemical additives such as stabilizers described hereinafter are not considered part of the binder solids. Non-binder solids other than pigments usually do not amount to more than 5-15% by weight of the composition.

"Acrylate" as used herein generically describes methacrylate as well as other acrylate, except with the caveat that where specific reference to either acrylate or methacrylate is appropriate, it will be obvious to one of ordinary skill in the chemical art.

"Acrylic polyol" means a polymer formed from a monomer mixture wherein the monomer mixture contains greater than 50 percent by weight of acrylate monomers, and the polymer has on average more than 1.0 hydroxyl groups per molecule.

"Polyester-extended acrylate" monomer means a monomer of the formula;

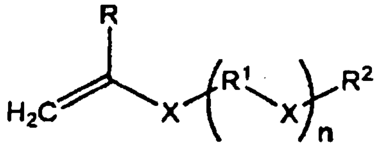

wherein each X is independently selected from the group C(O)O and OC(O); R is H or $CH_3$; $R^1$ is alkyl, aryl, alkylaromatic, or aromaticalkyl; $R^2$ is hydroxy terminated alkyl, aryl, alkylaromatic, or aromaticalkyl; and n is an integer in the range of from 1 to 20. Preferably, the polyester-extended acrylic monomer is the reaction product of 2-hydroxyethyl acrylate or

2-hydroxyethyl methacrylate with caprolactone. One such product is commercially available from Dow Carbide as TONE M-100®.

"Polyester-extended polymer" means a polymer that has, on average, at least one polyester-extended monomer per polymer chain.

As used herein, the term "substrate" means any surface, such as metal, wood, resin, asphalt, or any other surface. The substrate may be previously coated with a material, such as, an electrodeposition primer, a primer, a primer/sealer, or a pigmented coating.

"Organically-modified mineral" or "mineral silicate" or "layered silicate mineral" means a naturally occurring or man-made mineral comprising an alkaline (earth) or transition metal and a silicate moiety.

The layered silicates can be 'treated' or 'untreated'. A treated layered silicate has undergone a process to chemically modify the surface by adding an organic group which is either covalently or ionically bonded. One preferred treatment method is to contact the layered silicate with a quaternary amine. An untreated silicate does not have this surface modification.

"Flop" or "flop index" is the measurement on the change in reflectance of a metallic color as it is rotated through the range of viewing angles.

"Crosslinkable component" means a component that has functional groups appended thereon that are capable of reacting with the crosslinking component to form a crosslinked network. The crosslinkable component may comprise a compound, oligomer, polymer, or a combination thereof having at least one functional group reactive with the crosslinking component. Preferably the crosslinkable component comprises an acrylic polyol. The functional groups in the crosslinkable component can be chosen from hydroxy, amino, hydroxy silane, alkoxysilane, epoxy, carbamate, carboxy, anhydride, or a combination thereof. The preferred functional group is hydroxy.

"Crosslinking component" means a component that is capable of reacting with the functional groups on the crosslinkable component to form a crosslinked network. The crosslinking component can be selected from the group consisting of melamine, amino resin, polyisocyanate, blocked polyisocyanate, or a combination thereof.

The features and advantages of the present invention will be more readily understood, by those of ordinary skill in the art, from reading the following detailed description. It is to be appreciated that certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of thixotropic agents in coating compositions is intended to allow the application of a layer of a coating composition to a substrate without the applied, uncured coating layer running or sagging from the surface of the substrate. Many compounds are known and are used as thixotropes in coatings compositions. Examples of these materials are; crosslinked polymeric microparticles, various clays, silica, or synthetic polymers containing ionic or associative groups such as polyvinyl alcohol, poly(meth)acrylic acid, ethylene-maleic anhydride copolymers, or polyvinylpyrrolidone polymers. U.S. Patent No. 6,652,915 describes a coating material having a mixture of silica and a urea and/or a urea derivative.

A key feature of thixotropic agents is that the viscosity of a paint prepared using them depends on the flow history and/or that the thixotropic agents are pseudoplastic, i.e., that the viscosity of the paint decreases as the shear stress increases. Starting from a baseline viscosity, the viscosity decreases during shear stress and only after the end of the shear stress does it gradually return to its initial viscosity. A thixotropic gel, for example, is liquefied by the input of mechanical energy (such as by stirring) and gels gradually again only when the energy input stops. Pseudoplastic or thixotropic properties are advantageous for paint processing. On the other hand, thixotropic agents must not adversely affect the visual and chemical properties of a finished coating produced using them.

It has been found that a combination of a diurea compound and a layered silicate mineral leads to a coating composition that exhibits a reduced tendency of the uncured coating to running or sagging. It also surprisingly provides a basecoat composition that provides an exceptionally smooth layer and, if metallic effect pigments are present, produces an effect coating that has a high degree of flop.

The coating composition of this disclosure comprises a metallic effect pigment, a crosslinkable component, a crosslinking component, a diurea compound, and at least one layered silicate mineral. The coating composition of the present invention is preferably solvent-borne. The diurea compound is present in the coating composition in the range of from 0.1 percent to 3.0 percent, preferably in the range of from 0.5 percent to 2.0 percent, most preferably in the range of from 1.3 percent to 1.8 percent. All percentages are weight percentages based upon the total weight of the binder solids.

Diurea compounds can be made by various methods known to one of ordinary skill in the art. For example, suitable diureas can be obtained by reacting one equivalent of a diisocyanate compound with two equivalents of a monoamine. It is preferred that the diurea so produced is symmetrical.

Examples of monoamines that could be used include the following: benzylamine, ethylamine, n-propylamine, isopropylamine, n-butylamine, isobutylamine, tert-butylamine, pentylamine, n-hexylamine, n-octylamine, isononanylamine, isotridecylamine, n-decylamine and stearylamine. It is also possible to use primary and secondary amines containing ether groups. These are substances of the general formula;

$$R^3\left(O-R^4\right)_a NH_{3-a}$$

wherein $R^3$ is an alkyl group of 1 to 20 carbons, $R^4$ is an alkyl group of 2 to 4 carbons, a is 1 or 2.

Polyisocyanates suitable for producing the urea derivatives contain at least two isocyanate groups per molecule. It is preferred to use diisocyanates, especially hexamethylene diisocyanate. Examples of polyisocyanates that can be used include the following: tetramethylene 1,4-diisocyanate, hexamethylene 1,6-diisocyanate, omega, omega'-dipropyl ether diisocyanate, cyclohexyl 1,4-diisocyanate, dicyclohexylmethane 4,4'-diisocyanate, 1,5-dimethyl-2,4-di(isocyanatomethyl)benzene, 1,5-dimethyl-2,4-di(isocyanatoethyl)benzene, 1,3,5-trimethyl-2,4-di(isocyanatomethyl)benzene, 1,3,5-triethyl-2,4-di(isocyanatomethyl)benzene, the trimer of hexamethylene 1,6-diisocyanate, isophorone diisocyanate, dicyclohexyldimethylmethane 4,4'-diisocyanate, 2,4-tolylene diisocyanate, 2,6-tolylene diisocyanate, diphenylmethane 4,4'-diisocyanate. Further examples of suitable polyisocyanates and diisocyanates are the isocyanates described below and used as crosslinking agents.

Alternatively, suitable diureas can be produced by the reaction of a diamine with two equivalents of a monoisocyanate. One skilled in the art would be able to choose the appropriate reagents to form suitable ureas. For example, one preferred diurea can be produced by the reaction of 1,6-hexamethylene diamine with 2 equivalents of benzyl isocyanate. The same product can also be produced by the reaction of 1,6-hexamethylene diisocyanate with 2 equivalents of benzyl amine.

Layered silicates are present in the coating composition in the range of from 0.10 to 3.0 percent by weight, preferably from 0.5 to 1.5 percent by weight, more preferably from 0.6 to 1.0 percent by weight, all weight percentages are based upon the total weight of the binder solids.

The layered silicates that are useful in the coating compositions comprise layered silicates known to the person skilled in the art and are, for example aluminum-magnesium silicates, sodium-magnesium silicates and sodium-magnesium-lithium silicates, all with a layered structure. Examples of such layered silicates are layered silicates of the bentonite, smectite, montmorillonite and hectorite type. Naturally occurring layered silicates may be used, but synthetically manufactured layered silicates are preferred. Examples of commercially available layered silicates which may be used are the GARAMITE® products (from Southern Clay Products, Gonzales, Texas), OPTIGEL® products (from Südchemie Moosburg, Germany), LAPONITE® RD (from Solvay, Rheinberg, Germany) or BORCHIGEL® layered silicates (from Borchers, Monheim, Germany).

The layered silicate minerals can be treated or untreated. A treated layered silicate has undergone a process to chemically modify the surface by adding an organic group which is either covalently or ionically bonded. One common treatment of the layered silicates is to contact the layered silicate with one or more quaternary amine compounds. Many of these products are commercially available. In the present invention, the preferred layered silicate mineral is aluminum magnesium silicate treated wth at least one quaternary amine.

The use of the diurea and layered silicate mineral enhances the flop index of the coating composition containing metallic flake pigments and mica flake effect pigments. These materials also contribute to enhanced rheological properties that allow a relatively thick coating to be applied to the substrate surface. These materials also help to align the effect pigments which generates a high flop index and an exceptionally smooth layer is formed.

In a coating composition containing only solid color pigments, an exceptionally smooth layer is formed. A smooth paint layer is highly desirable in many coating applications. The addition of diurea and layered silicate helps to promote this smooth texture in comparison with current commercial basecoat compositions.

It is possible using the coating composition of this disclosure to allow a vehicle manufacturer to apply a single thick coat (up to 38 μm (1.5 mils)) rather than the traditional two thin coats while still achieving a very high flop index. Applying a single coating rather than two relatively thin coatings can significantly decrease the cost of painting a substrate as only half of the amount of basecoat painting equipment is needed.

The coating composition also contains a film-forming binder. The film-forming binder is made up of a crosslinkable component and a crosslinking component. The crosslinkable component is preferably an acrylic polyol. Other suitable examples include polyesters, polyurethanes, polyepoxides, alkyd resins, or a combination thereof. The crosslinkable component preferably contains, on average, more than 1.0 functional group per molecule that is capable of reacting with the crosslinking component of the composition. Suitable functional groups for the crosslinakble component can include hydroxy, amino, hydroxy silane, alkoxysilane, epoxy, carbamate, carboxy, anhydride, or a combination thereof. Preferably, the crosslinkable components are acrylic polymers having hydroxy functional groups.

One preferred acrylic polymer for use as the crosslinkable component comprises an acrylic polyol comprising at least 40 percent by weight based on the total weight of the acrylic polyol of a combination of at least one linear or

branched C8 or higher alkyl acrylate monomer and a second monomer that is a polyester-extended acrylate monomer, such as TONE® M-100.

Suitable $C_8$ or higher alkyl acrylate monomers include monomers of formula;

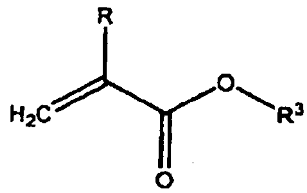

wherein R is H or $CH_3$ and $R^3$ is a linear or branched alkyl having 8 or more carbons. Preferably, $R^3$ has more than 10 carbons and more preferably, $R^3$ has more than 12 carbons. $R^3$ is not particularly limited as to an upper limit of carbon atoms. However, at greater than 30 carbons, the monomers tend to be solids which are harder to handle in production and the Tg of polymers produced using these monomers tends to be too low to make a suitable coating.

Examples of suitable linear or branched C8 or higher alkyl acrylate monomers include octyl acrylate, octyl methacrylate, nonyl acrylate, nonyl methacrylate, decyl acrylate, decyl methacrylate, undecyl acrylate, undecyl methacrylate, dodecyl acrylate, dodecyl methacrylate, isodecyl acrylate, isodecyl methacrylate, isotridecyl acrylate, isotridecyl methacrylate, tridecyl acrylate, tridecyl methacrylate, tridecyl acrylate, tridecyl methacrylate, lauryl acrylate, lauryl methacrylate, stearyl acrylate, and stearyl methacrylate. Combinations thereof are also useful.

Preferably the C8 or higher alkyl acrylate monomers comprise in the range of from 10 percent to 60 percent by weight of the monomers in the acrylic polyol, more preferably, the C8 or higher alkyl acrylate monomers comprise in the range of from 26 percent to 55 percent by weight of the monomers in the acrylic polyol, most preferably, the C8 or higher alkyl acrylate monomers comprise in the range of from 39 percent to 50 percent by weight of the monomers in the acrylic polyol.

When the preferred acrylic polyol is used as a film-forming binder in a basecoat for a 3-wet application process, the preferred molecular weight for the poly(meth)acrylate copolymer is from 3,000 to 45,000. It has been found that at weight average molecular weights below 3,000, the coatings begin to exhibit some strike-in. Strike-in refers to the intermixing of two wet layers of paint. Above a molecular weight of 45,000, the surface appearance begins to degrade and the flop measurement goes down.

Preferably, the acrylic polyol comprises at least 40 percent by weight of at least one linear or branched C8 or higher alkyl acrylate and at least one polyester-extended acrylate monomer. As the C8 or higher alkyl acrylate monomer can comprise in the range from 10 percent by weight to 60 percent by weight of the acrylic polyol, if one uses 10 percent by weight of the C8 or higher alkyl acrylate monomer then the polyester extended acrylate monomer must comprise at least 30 percent by weight of the acrylic polyol to achieve the at least 40 percent. The remaining portion of the acrylic polyol may comprise monomers having no crosslinkable functional groups and/or monomers having crosslinkable functional groups such as amino groups, carbamate, alkoxy silane such as trimethoxy silane, epoxy, carboxy groups, anhydride groups, or a suitable combination thereof, to impart additional crosslinking functionality to the polymer and enhance the integrity of the cured coating. The number of functional groups may vary, depending on the final properties desired. These functional groups can be introduced by employing a functional monomer comprising the desired group in the polymerization process or by post-reaction of the acrylic polyol to introduce the desired additional functionality, as will be apparent to those skilled in the art.

Examples of useful amine-containing monomers are N,N-dimethylaminoethyl methacrylate, N,N-dimethylaminoethyl acrylate, N-t-butylaminoethyl methacrylate, N-t-butylaminoethyl acrylate, 2-aminoethyl methacrylate, 2-aminoethyl acrylate.

Examples of useful carbamate containing monomers include adducts of aliphatic alcohols with isocyanate containing acrylates or methacrylates. Methods for preparation if carbamate functionalized acrylics are well known in the art and described, for example, in EP 0 594 142 B1 and EP 0 719 795 B1.

Examples of such functional monomers are silane-containing monomers, particularly alkoxy silanes such as gamma-acryloxypropyl trimethoxysilane, gamma-methacryloxypropyl trimethoxysilane (SILQUEST®A-174 from Crompton), and gamma-methacryloxypropyltris(2-methoxyethoxy) silane.

Examples of useful epoxy containing monomers are glycidyl methacrylate and glycidyl acrylate and any acrylic monomer with a hydroxy group that can be reacted with epichlorohydrin to produce the epoxy group containing monomers.

Examples of carboxy or anhydride containing monomers are acrylic acid, methacrylic acid, maleic anhydride, and fumaric anhydride.

Examples of monomers having no crosslinkable functionality include alkyl acrylates such as methyl acrylate, ethyl acrylate, propyl acrylate, isopropyl acrylate, butyl acrylate, isobutyl acrylate, hexyl acrylate, cyclohexyl acrylate,

propyl acrylate, phenyl acrylate, isobornyl acrylate, methyl methacrylate, ethyl methacrylate, butyl methacrylate, t-butyl methacrylate, hexyl methacrylate, cyclohexyl methacrylate, propyl methacrylate, phenyl methacrylate, isobornyl methacrylate; styrenes or substituted styrenes, such as 4-methyl styrene, alpha-methyl styrene; acrylonitrile, and methacrylonitrile, acrylamide, methacrylamide, or a combination thereof.

One preferred acrylic polyol comprises styrene, butyl methacrylate, TONE M-100®, isotridecyl methacrylate, and acrylic acid. Another preferred acrylic polyol comprises styrene, isodecyl methacrylate, TONE M-100®, isotridecyl methacrylate, and acrylic acid.

The monomers used to produce the acrylic polyol can be polymerized using methods known to those skilled in the art. Preferably, the acrylic polyol is prepared by a solution polymerization method in which the monomers are blended with a liquid reaction medium, a free radical polymerization initiator, optionally caprolactone modified monomer, optionally a polymerization catalyst for the caprolactone, and optionally a chain transfer agent, and heated to 75°C. to 165°C. for a sufficient time, typically for 2 to 8 hours, to form a polymer.

In addition to the above crosslinkable component, the film-forming binder also contains a crosslinking component, which comprises a crosslinking agent. The crosslinking agent used in the present composition is an aminoplast resin, melamine, a polyisocyanate or a blocked polyisocyanate resin or mixture thereof. Aminoplast resins such as melamine formaldehyde condensates are generally preferred. In general, aminoplast resins are aldehyde condensation products of melamine, urea, benzoguanamine, or a similar compound. Usually, the aldehyde employed is formaldehyde, although useful products can be made from other aldehydes, such as acetaldehyde, crotonaldehyde, acrolein, benzaldehyde, furfural, and others. Condensation products of melamine or urea are the most common and are preferred, but products of other amines and amides in which at least one amine group is present can also be employed.

Of the aminoplast resins, monomeric or polymeric melamine formaldehyde condensate resins that are partially or fully alkylated are generally preferred. These preferred resins are organic solvent-soluble and are commercially available under the tradename CYMEL ® from Cytec Industries, Inc., West Patterson, New Jersey. One preferred crosslinking agent is a methylated and butylated or isobutylated melamine formaldehyde resin that has a degree of polymerization of 1-3. Generally, this melamine formaldehyde resin contains 50 percent butylated groups or isobutylated groups and 50 percent methylated groups. Another preferred melamine, for a good balance of properties is, a fully methylated resin known as CYMEL 303 ®.

The aminoplast crosslinking agent(s) described above can be substituted for or optionally combined with any of the conventional blocked polyisocyanate crosslinking agents for enhanced film properties. Typical blocking agents are alcohols, ketimines, oximes, and pyrazoles.

Other crosslinking agents can also be used, such as urea formaldehyde, benzoguanamine formaldehyde and blocked or unblocked polyisocyanates or compatible mixtures of any of the forgoing crosslinkers.

Typical examples of polyisocyanates are isocyanate compounds having 2 to 4 isocyanate groups per molecule, such as 1,6-hexamethylene diisocyanate, isophorone diisocyanate, 2,4-toluene diisocyanate, diphenylmethane-4,4'-diisocyanate, dicyclohexylmethane-4,4'-diisocyanate, tetramethylxylidene diisocyanate, and the like. Polyisocyanate condensation products can also be used. Polyisocyanates having isocyanurate, biuret, iminooxadiazine, and/or uretidione structural units are suitable. Some examples include DESMODUR N-3300® from Bayer Corporation of Pittsburgh, Pennsylvania and the isocynaurate of isophorone diisocyanate (isocyanurate) which is available under the tradename DESMODUR Z-4470® from Bayer Corporation.

Polyisocyanate functional adducts can also be used that are formed from any of the previously mentioned organic polyisocyanates and a polyol. Polyols such as trimethylol alkanes like trimethylol propane or ethane can be used. One useful adduct is the reaction product of tetramethylxylidene diisocyanate and trimethylol propane and is available under the tradename of CYTHANE 3160®. When the crosslinkable resin of the present invention is used in exterior coatings, the use of an aliphatic or cycloaliphatic isocyanate is preferable to the use of an aromatic isocyanate, from the viewpoint of weatherability and yellowing resistance. An example of a suitable blocked isocyanate that can be used in the present system is a pyrazole-blocked polyisocyanate of 1,6-hexamethylene diisocyanate which is available from Bayer Corporation.

To increase the rate of crosslinking of the composition on curing, a catalyst can be added to the composition. Generally, 0.1-8 percent by weight, based on the weight of the binder, of catalyst is used. Typical of such catalyst are blocked acid catalysts. Useful blocked acid catalysts are aromatic sulfonic acids blocked with amino methyl propanol or dimethyl oxazoline. Typically useful aromatic sulfonic acids are para toluene sulfonic acid, dodecyl benzene sulfonic acid, decyl benzene sulfonic acid. One preferred catalyst is dodecyl benzene sulfonic acid blocked with amino methyl propanol.

The coating composition typically includes one or more solvents such as organic solvent selected from aromatic hydrocarbons, such as petroleum naphtha or xylenes; ketones, such as, methyl amyl ketone, methyl isobutyl ketone, methyl ethyl ketone or acetone; esters, such as, butyl acetate or hexyl acetate; glycol ether esters, such as propylene glycol monomethyl ether acetate; and combination thereof. The coating composition generally includes in the range of 10 percent to 60 percent, preferably 20 percent to 50 percent, more preferably 30 percent to 40 percent of the aforedescribed solvents, all the percentages being in weight percent based on the total weight of the coating composition.

The coating composition of the present invention can also contain conventional additives, such as pigments, pigment dispersants, stabilizers, rheology control agents, flow agents, toughening agents and fillers. Selection of such additional additives would, obviously, depend on the intended use of the coating composition. The foregoing additives may be added to either the crosslinkable or crosslinking component, or both, depending upon the intended use of the coating composition.

As outlined above, the coating composition according to the present invention comprises metallic effect pigments e.g. metallic flake pigments, such as aluminum flakes, mica flakes, pearlescent flakes or a combination thereof. Typical further pigments that can be used in the coating composition are filler pigments such as talc, china clay, barytes, carbonates, silicates, and color pigment such as metallic oxides such as titanium dioxide, zinc oxide and iron oxide and carbon black and organic colored pigments and dyes. Also useful as pigments that can be added to the composition include the following: metallic oxides, such as titanium dioxide, zinc oxide, iron oxides of various colors, carbon black; filler pigments, such as talc, china clay, barytes, carbonates, silicates; and a wide variety of organic colored pigments, such as quinacridones, copper phthalocyanines, perylenes, azo pigments, indanthrone blues, carbazoles, such as carbozole violet, isoindolinones, isoindolones, thioindigo reds, benzimidazolinones, or a combination thereof. The resulting coating composition has a pigment to binder weight ratio of 1:100-150:100.

To improve the outdoor weatherability of the composition and protect the coated substrate from premature degradation, the composition typically contains 0.01 to 2 percent by weight, based on the weight of the binder, of ultraviolet light stabilizers which term includes ultraviolet light absorbers, screeners and quenchers. Typical ultraviolet light stabilizers include benzophenones, triazines, triazols, benzoates, hindered amines and blends of thereof.

The coating composition of the present invention can be used as the basecoat, in a basecoat/clearcoat wet on wet process. In this process, a layer of the present coating composition is applied as a basecoat to a previously coated or uncoated substrate by spraying, electrostatic spraying, roller coating, dipping, or brushing. The coating composition is optionally flashed to remove at least a portion of the solvent. Optionally, another layer of the basecoat composition is applied, followed by an optional flash step. The layer or layers of basecoat composition is then overcoated with a layer of clearcoat composition. Optionally, the clearcoat layer is flashed. Optionally, more than one layer of the clearcoat may be applied to the basecoat, each application being followed by an optional flash step. The combined basecoat and clearcoat layers are heated to 60°C to 200°C for 10 minutes to 60 minutes to dry and cure the applied layers. By "dried and cured" or "cured" is meant that a majority (greater than 50 percent) of the solvent has been removed and that the crosslinkable and crosslinking components are substantially crosslinked, although it is understood that some additional crosslinking may occur after the curing process.

In a preferred embodiment, above the coating composition of the present invention is used in a 3-wet application process. In this process, a layer of a primer composition is applied to previously coated or uncoated substrate followed by an optional flash step. A layer of present coating composition is applied over the layer of primer composition as the basecoat. The applied basecoat is optionally flashed to remove at least a portion of the solvent. Optionally, multiple layers of the basecoat composition can be applied to the first layer of basecoat each optionally followed by a flash step. A single layer or multiple layers of clearcoat composition is applied to the substrate, optionally flashing between layers to remove a portion of the solvent. The applied layers of the multi-coated substrate are then dried and cured. The drying and curing step is performed by heating the substrate to a temperature in the range of from 60°C to 200°C for 1 minute to 60 minutes.

It is important that the wet primer composition and the overlying basecoat composition have adequate strike-in resistance. In the 3-wet method, particularly useful 3-wet primer compositions are described below.

One useful 3-wet primer composition comprises a crosslinkable component and a crosslinking component wherein the crosslinkable component comprises 40 to 95 percent by weight, based on the total weight of the crosslinkable component and the crosslinking component, of a polyester-extended branched acrylic polymer having a hydroxyl and/or carboxyl monomer content, all or part of which has been reacted with a cyclic lactone, of 1 to 65 percent by weight and a weight average molecular weight of 10,000 to 150,000; and wherein the crosslinking component that comprises 5 to 60 percent by weight, based on the total weight of the crosslinkable component and the crosslinking component, of an aminoplast resin, a blocked polyisocyanate resin, or a combination thereof.

Another useful 3-wet primer composition comprises a crosslinkable component and a crosslinking component wherein the crosslinkable component comprises 40 to 95 percent by weight, based on the total weight of the crosslinkable component and the crosslinking component, of a branched acrylic polymer having a hydroxyl, carboxyl, and or other crosslinkable functional group monomer content of 1 to 65 percent by weight and a weight average molecular weight of 10,000 to 150,000; and wherein the crosslinking component comprises 5 to 60 percent by weight, based on the total weight of the crosslinkable component and the crosslinking component, of an aminoplast resin, a blocked polyisocyanate resin, or a combination thereof.

Another useful 3-wet primer composition comprises a crosslinkable component and a crosslinking component wherein the crosslinkable component comprises 40 to 95 percent by weight, based on the total weight of the crosslinkable

component and the crosslinking component, of a polyester- extended linear acrylic polymer having a hydroxyl and/or carboxyl monomer content, all or part of which is reacted with a cyclic lactone, of 1 to 90 percent by weight and a weight average molecular weight of 10,000 to 150,000; and wherein the crosslinking component comprises 5 to 60 percent by weight, based on the total weight of the crosslinkable component and the crosslinking component, of an aminoplast resin, a blocked polyisocyanate resin, or a combination thereof.

Another useful 3-wet primer composition comprises a crosslinkable component and a crosslinking component wherein the crosslinkable component comprises 40 to 95 percent by weight, based on the total weight of the crosslinkable component and the crosslinking component, of a film-forming acrylic polymer component comprising two acrylic polymers, the first being a polyester-extended branched acrylic polymer and the second being a polyester-extended linear acrylic polymer, the polymers being provided in a relative weight ratio of from 5:95 to 95:5; and wherein the crosslinking component comprises 5 to 60 percent by weight, based on the total weight of the crosslinkable component and the crosslinking component, of an aminoplast resin, a blocked polyisocyanate resin, or a combination thereof.

In the above mentioned 3-wet primer formulations, the branched acrylic polymer is formed via a high temperature polymerization process. This process comprises,

1. (a) forming a reaction mixture of:

    1. (i) at least one monoacrylic monomer;
    2. (ii) at least one diacrylic or dimethacrylic monomer; and,
    3. (iii) optionally at least one monomethacrylic monomer, provided that the monomethacrylic monomer comprises no more than 40% by weight of the total monomer mixture;
    4. (iv) at least one free-radical polymerization initiator; and
    5. (v) optionally, at least one solvent; and,

2. (b) maintaining the reaction mixture, under polymerizing conditions, at an elevated reaction temperature of at least 130°C until the branched acrylic polymer is formed.

The polyester-extended branched acrylic polymer is formed by chain extending the branched acrylic polymer with a cyclic lactone or a cyclic lactone extended monomer either during or after the free-radical initiated polymerization, or a combination thereof.

In the 3-wet application process, the selection of the clearcoat composition is not particularly important, and any of the commercially available clearcoats may be chosen. Preferred clearcoat compositions are GEN IV ES® clearcoats, IMRON® clearcoats, CHROMACLEAR® clearcoats, and CHROMAPREMIER® clearcoats, all available from Du-Pont, Wilmington, DE.

Preferred substrates are automobile bodies, any and all items manufactured and painted by automobile sub-suppliers, frame rails, commercial trucks and truck bodies, including beverage bodies, utility bodies, ready mix concrete delivery vehicle bodies, waste hauling vehicle bodies, and fire and emergency vehicle bodies, as well as any potential attachments or components to such truck bodies, buses, farm and construction equipment, truck caps and covers, commercial trailers, consumer trailers, recreational vehicles, including motor homes, campers, conversion vans, vans, pleasure vehicles, pleasure craft snow mobiles, all terrain vehicles, personal watercraft, motorcycles, boats, and aircraft. The substrate further includes industrial and commercial construction and maintenance thereof; cement and wood floors; walls of commercial and residential structures, such office buildings and homes; amusement park equipment; concrete surfaces, such as parking lots and drive ways; asphalt and concrete road surface, wood substrates, marine surfaces; outdoor structures, such as bridges, towers; coil coating; railroad cars; printed circuit boards; machinery; OEM tools; signage; fiberglass structures; sporting goods; and sporting equipment.

## EXAMPLES

Unless otherwise specified, all chemicals are available from the Aldrich Company, Milwaukee, WI.

Cymel® 1168, monomeric melamine formaldehyde resin fully alkylated (50% methyl, 50% isobutyl) is available from Cytec Industries Inc., West Patterson, New Jersey.

Tinuvin® 079L (41% in xylene) is available from Ciba Specialty Chemicals Corp, Tarrytown, New York.

Nacure® XP-221 (aromatic sulphonic acid) is available from King Industries, Norwalk, Connecticut.

Garamite® 2578 (7% in acrylic polymer) is available from Southern Clay Products, Gonzales, Texas.

Silberline Tufflake® 4615 (33% of aluminum paste in acrylic resin) is available from Silberline MFG CO INC, Tamaqua, Pennsylvania.

RAVEN® 5000 Ultra II Beads are available from Columbia Chemical Co., Marietta, GA.

GEN 4 ES® clearcoat is available from DuPont, Wilmington, DE. Shellsol® products are available from the Shell

Chemicals LP, Houston, TX.

ATA TCR 2040A Aluminum paste is available from Toyal America, Inc., Naperville, IL.

In the following examples, the abbreviation 'NV' means non-volatiles and can be theoretical or an actual measured value.

The molecular weight (both number and weight average) of a polymer was determined by gel permeation chromatography (GPC) utilizing a high performance liquid chromatograph supplied by Hewlett-Packard, Palo Alto, California and unless otherwise stated the liquid phase used was tetrahydrofuran and the standard used is polystyrene.

"Tg" (glass transition temperature) is in °C and determined by Differential Scanning Calorimetry or calculated according to the Fox Equation.

Flop values are calculated from measurements determined by the X-Rite® machine, available from X-Rite, Inc., Grandville, MI, which measures the brightness property of each panel from 15°, 45°, and 110° angles. An average of three readings is taken at each angle and the following formula is used to calculate the flop where, for example, L15 represents the brightness measurement taken from the 15° angle:

$$[(L15 - L110)*10] / L45$$

CF number is the determination of whether the appearance was of automotive quality, i.e., whether the coating had an aesthetic appearance that meets the standard of automotive finishes, was determined by measurements taken from a WaveScan DOI instrument from BYK Gardner. This instrument measures the visual appearance of a finish at longer wavelengths that are indicative of a condition commonly known as orange peel as well at shorter wavelengths which helps to quantify the "distinctness of image" or DOI. These parameters taken in combination (by WaveScan CF readings) can be used to quantify the overall visual appearance of a vehicle finish. A minimum value of 60 on horizontal surface and minimum value of 50 on a vertical surface is desirable for automotive use.

Adhesion- the adhesion of 0 to 5 was determined in accordance with test method ASTM D3359 - a rating of at least 4B is an acceptable minimum.

Chip Resistance measures the ability of a coating system to resist physical damage from the impact of a hard material, most commonly stones or gravel, which are thrown against the vehicle by the wheels of passing cars, or in the case of rocker panels thrown up against the car by the wheels of the same car. Chip resistance was determined utilizing a gravelometer and follows the procedure described in test method SAE J-400 a rating of at least 5 is an acceptable minimum.

## Preparation of Acrylic Polymer #1

To a glass flask equipped with an agitator, thermometer, water condenser, nitrogen inlet and heating mantle was added 1347 grams of amyl acetate and 147.5 grams xylenes. This mixture was agitated and heated to reflux. A mixture of 240 grams of styrene, 240 grams of butyl methacrylate, 960 grams of TONE® M-100, 936 grams of isotridecyl methacrylate, 24 grams of acrylic acid, and 36 grams of VAZO® 67 was added over a 4 hour period. After this addition was complete, then mixture was stirred for 30 minutes and a mixture of 12 grams of VAZO® 67 in 96 grams of amyl acetate was added over a 20 minute period. The reaction was then held at reflux for an additional 2 hours then cooled to room temperature.

The molecular weight was determined by GPC to be 13,854, the viscosity was 126 centipoise at 26°C, and the totals solids was 60%.

## Preparation of Acrylic Polymer #2

To a 5-liter glass flask equipped with an agitator, thermometer, water condenser, nitrogen inlet and heating mantle was added 701.8 grams of amyl acetate and 82.6 grams xylenes. This mixture was agitated and heated to reflux. A mixture of 232.4 grams of styrene, 232.4 grams of isobutyl methacrylate, 907 grams of isodecyl acrylate, 930.2 grams of TONE M100 monomer, 23.2 grams of acrylic acid and 62.9 grams of VAZO 67 in a mixture of 60.3 grams of xylenes and 567.5 grams of amyl acetate was added over a 270 minute period. After this addition was complete, and additional 112.9 grams of amyl acetate was added. The mixture was cooled to room temperature.

The weight solids of the resulting polymer solution was 59.0% and the Gardner-Holdt viscosity measured at 25°C was B+1/2. The weight average molecular weight of the polymer was 11,190 and the polydispersity was 2.91 as determined by GPC.

**Preparation of Acrylic Polymer #3**

To a 5-liter glass flask equipped with an agitator, thermometer, water condenser, nitrogen inlet and heating mantle was added 666 grams SOLVESSO® 100. This mixture was agitated and heated to reflux. While maintaining the batch at reflux, a mixture of 1473.8 grams n-butyl methacrylate and 982.5 grams hydroxypropyl acrylate in 31 grams SOLVESSO® 100 was added over a 180 minute period. A separate addition of 15.9 grams t-butyl peroxyacetate in 89.5 grams SOLVESSO® 100 was added simultaneously over a 195 minute period. After the additions were completed, 220.5 gms of SOLVESSO® 100 was added to the reaction mixture. Then the reaction mixture was held at reflux for an additional 40 minutes. The weight solids of the resulting polymer solution was 69.4% and the Gardner-Holdt viscosity measured at 25 C was Z. Weight average molecular weight of the polymer was 6,485 and polydispersity was 1.99, determined by GPC using polystyrene standards.

**Acrylic Polymer #4**

To a flask equipped with an agitator, thermometer, water condenser, nitrogen inlet and heating mantle was added 1758.6 grams of SOLVESSO® 100. The solvent was heated to reflux. A mixture of 703.4 grams of 1,6-hexanediol diacrylate, 3033.6 grams of isobornyl acrylate, 659.5 2-hydroxyethyl methacrylate, and 44 grams of tert-butyl peroxy acetate in 703.4 grams of SOLVESSO® 100 was added over a 300 minute period. When the addition was complete, the reaction was held at reflux for an additional 30 minutes and then a mixture of 885.3 grams of epsilon-caprolactone, 412.2 grams of SOLVESSO® 100, and 3.0 grams of dibutyltin dilaurate was added over a 30 minute period. The reaction was then held at reflux for an additional 3 hours. The mixture was then cooled to room temperature and filled out. The weight solids of the resulting polymer solution was 65.8% and the Gardner-Holdt viscosity (ASTM D1545-98) measured at 25°C was X. Weight average molecular weight of the polymer was 37,690 and polydispersity was 11, determined by GPC.

**Preparation of Acrylic Polymer #5**

To a flask equipped with an agitator, thermometer, water condenser, nitrogen inlet and heating mantle was added 2963 grams of amyl acetate and 324.5 grams of xylene. The mixture was heated to reflux. A mixture of 792 grams of styrene, 528 grams of butyl methacrylate, 2640 grams of TONE® M-100, 1214.4 grams of butyl acrylate, 105.6 grams of acrylic acid, and 55 grams of VAZO® 67 was added over a 4 hour period. When the addition was complete, the reaction was held at reflux for an additional 30 minutes. A mixture of 17.6 grams of VAZO® 67 in 211.12 grams of amyl acetate was added over a 20 minute period. When the addition was complete, the reaction was held at reflux for an additional 2 hours. The mixture was cooled to room temperature and filled out. The resulting polymer solution was a clear polymer solution, and had a solids content of 60% and a Brookfield viscosity of 454 centipoise at 25°C. The polymer had a 49,173 Mw (weight average molecular weight) and a 5,866 Mn (number average molecular weight).

**Preparation of Microgel Resin**

**Preparation of Poly 12-hydroxystearic acid**

To a 5-liter glass flask equipped with an agitator, thermometer, packed column, decanter, water condenser, nitrogen inlet and heating mantle was added 1777 grams 12-hydroxy stearic acid, 250 grams toluene and 5.1 grams methane sulfonic acid. This mixture was agitated and heated to a maximum temperature of 180C. Water was removed until an acid number of 33-35 was reached. At this time, the reaction mixture was cooled to 120°C. Then 1.8 grams 4-tertiarybutyl catechol, 9.5 grams toluene, 214.7 grams glycidyl methacrylate, 7.1 grams N,N-dimethyldodecylamine and 79.3 grams SHELLSOL® D38 was added to the flask. This mixture was heated to reflux and held until the acid number was below 2. The weight solids of the resulting polymer solution was 84.2% and the Gardner-Holdt viscosity measured at 25°C was S. Weight average molecular weight of the polymer was 3582 and polydispersity was 1.52, determined by GPC.

**Preparation of Microgel Stabilizer**

To a 3-liter glass flask equipped with an agitator, thermometer, water condenser, nitrogen inlet and heating mantle was 587.4 grams butyl acetate. This mixture was agitated and heated to 96-100°C. While maintaining the batch at 96-100°C, a mixture of 417 grams methyl methacrylate, 39.2 grams glycidyl methacrylate, 545 grams poly 12-hydroxystearic acid prepared above, 297.2 grams butyl acetate, 24 grams VAZO® 67 and 344.7 grams SHELLSOL® D38 was added over a 180 minute period. After the addition was completed, the reaction mixture was held at 96-100°C for

90 minutes. Subsequently, 3.3 grams butyl acetate and 0.12 grams 4-tertiarybutyl catechol was added to the flask. Five minutes after this addition, 8.1 grams methacrylic acid, 1.1 grams N,N-dimethyldodecylamine and 31 grams butyl acetate were added as a shot. The resulting mixture was heated to reflux and held until the acid number was less than 0.45. The weight solids of the resulting polymer solution was 41.4% and the Gardner-Holdt viscosity measured at 25 C was G + 1/4. Weight average molecular weight of the polymer was 18155 and polydispersity was 2.08, determined by GPC.

**Preparation of Microgel**

To a 5-liter glass flask equipped with an agitator, thermometer, water condenser, nitrogen inlet and heating mantle was added 1.04 grams VAZO® 67,16.3 grams of the microgel stabilizer, 33.87 grams methyl methacrylate, 182 grams n-heptane and 221 grams SHELLSOL® 7 EC. This mixture was agitated, sparged with nitrogen for 30 minutes and heated to reflux. This initial charge was held at reflux for 30 minutes. While maintaining the batch at reflux, a mixture of 648.6 grams methyl methacrylate, 6.23 grams glycidyl methacrylate, 6.23 grams methacrylic acid, 123.5 grams of the microgel stabilizer, 1.5 grams N,N-dimethylethanol amine, 117.6 grams n-heptane, and 221 grams SHELLSOL® 7 EC was added over a 120 minute period. Simultaneously, a mixture of 2.28 grams VAZO® 67 and 89.1 grams Solvesso 100 was added over a 120 minute period. The reaction mixture was then held at reflux for 120 minutes. After the hold period, 23.5 grams n-butanol was added. Subsequently, a mixture of 147.3 grams hydroxypropyl acrylate, 221.1 grams n-butyl methacrylate, 30.9 grams of the microgel stabilizer, 26.93 grams tertiarybutyl peroctoate, 46.1 grams n-heptane and 129 grams n-butanol was added over a 120 minute period. The reaction mixture was then held at reflux for an additional 30 minutes, then cooled to ambient temperature. The weight solids of the resulting polymer solution was 50.7% and the viscosity measured at 25 C with a Brookfield viscometer was 63 mPa-s (63 centipoise )(#1 spindle at 50 rpm). Particle size of the polymer solution was 287 nanometers.

**Preparation of Diurea Dispersion #1**

53 grams of benzyl amine was added to 3000 grams of acrylic polymer #1. The mixture was stirred for 5 minutes. 41.7 grams of hexamethylene diisocyanate was added all at once to this mixture. When the addition was complete, the mixture was stirred for 8 minutes and used as is.

**Preparation of Diurea Dispersion #2**

53 grams of benzyl amine was added to 3000 grams of acrylic polymer #2. The mixture was stirred for 5 minutes. 41.7 grams of hexamethylene diisocyanate was added all at once to this mixture. When the addition was complete, the mixture was stirred for 8 minutes and used as is.

**Preparation of Silica Dispersion #1**

9 parts of AEROSIL®R-805 was mixed with 91 parts of acrylic polymer #3. The mixture was placed in a sand mill and was processed through the sand mill two times.

**Preparation of GARAMITE® Dispersion**

N-butyl propionate, 54.40 parts was added to a mixing mill under a nitrogen atmosphere. 7.60 parts of GARAMITE® was added with stirring. After stirring for 20 minutes, 38.0 parts of acrylic polymer #14 was added. After stirring for 60 minutes, the mixture was passed through the mill three times using zirconia media (0.8-1.0mm).

**Preparation of Primer Composition #1**

The following ingredients were added to a suitable mixing vessel in the order given. All amounts are in parts by weight.

| | | |
|---|---|---|
| Carbon Black Pigment dispersion | | 0.46 |
| White pigment dispersion | | 18.62 |
| Butyl Acetate | | 1.96 |
| Isopropanol | | 8.61 |

(continued)

| | | |
|---|---|---|
| NACURE® XP-221 | | 1.47 |
| CYMEL® 1168 | 9.01 | |
| Diurea dispersion #1 | 12.27 | |
| Acrylic Polymer #4 | | 23.03 |
| Barium sulfate pigment dispersion | 3.50 | |
| Acrylic polymer #5 | | 12.78 |
| GARAMITE® dispersion | | 4.12 |
| TINUVIN® 123 | 0.48 | |
| TINUVIN® 328 | 3.69 | |

**Preparation of Silver Metallic Basecoat Compositions 1-5**

Silver metallic basecoat compositions was prepared by mixing together the ingredients shown in Table 1 in a suitable mixing vessel in the order shown. All amounts shown in Table 1 are in parts by weight.

**TABLE 1**

| | Basecoat 1 (control) | Basecoat 2 (comparative) | Basecoat 3 (comparative) | Basecoat 4 | Basecoat 5 (comparative) |
|---|---|---|---|---|---|
| CYMEL® 1168 | 17.40 | 15.91 | 17.55 | 16.68 | 15.88 |
| Acrylic polymer #1 | 38.19 | 33.96 | 8.69 | 7.71 | 7.86 |
| Xylene | 11.49 | 10.50 | 11.58 | 11.01 | 1.48 |
| TINUVIN® 079L | 0.68 | 0.62 | 0.68 | 0.65 | 0.62 |
| TINUVIN® 328 | 1.82 | 1.66 | 1.83 | 1.74 | 1.66 |
| NACURE® XP-221 | 1.08 | 0.99 | 1.09 | 1.04 | 0.99 |
| GARAMITE® 2578 | 0.00 | 9.54 | 0.00 | 5.51 | 0.00 |
| Diurea Dispersion #1 | 0.00 | 0.00 | 28.97 | 27.53 | 26.21 |
| Methanol | 1.48 | 1.35 | 1.49 | 1.42 | 1.35 |
| | Basecoat 1'(control) | Basecoat 2 (comparative) | Basecoat 3 (comparative) | Basecoat 4 | Basecoat 5 (comparative) |
| N-methyl-2-pyrolidone | 1.10 | 1.00 | 1.10 | 1.05 | 1.00 |
| Silberline TUFFLAKE® 4615 | 25.28 | 23.11 | 25.49 | 24.23 | 23.07 |
| Isobutyl alcohol | 1.49 | 1.36 | 1.50 | 1.43 | 1.36 |
| Silica Dispersion #1 | 0.00 | 0.00 | 0.00 | 0.00 | 9.52 |

**Coating Examples 1-5**

Phosphatized steel panels were coated with a cathodic epoxy resin based electrodeposition primer (Cormax ® 6 ED from DuPont Company, Wilmington, DE). The resulting electrodeposition primered panels were cured to achieve a film build of 23 μm (microns).

These panels were then coated with a layer of primer composition, Titanium Primer 708A01244, available from DuPont, Wilmington, DE. Each primed panel was then flashed for 10 minutes at ambient temperature and cured in a drying oven at 140°C for 30 minutes. The panels were then cooled to ambient temperature. Basecoat compositions 1-5 were then applied in two layers to the panels with a one-minute flash at ambient temperature between layers. The panels

were then flashed at ambient temperature for 3 minutes. One layer of GEN 4 ES® clearcoat composition was applied to each panel and the panel was flashed for one minute at ambient temperature. A second layer of GEN 4 ES® clearcoat composition was then applied and the panel was then flash dried for 5 minutes at ambient temperature and cured in a vertical position in a drying oven at 140°C for 30 minutes.

## Coating Examples 6-10

Phosphatized steel panels were coated with a cathodic epoxy resin based electrodeposition primer (Cormax® 6 ED from DuPont Company, Wilmington, DE). The resulting electrodeposition primer was cured to achieve a film build of 23 μm (microns).

These panels were then coated with a layer of primer composition #1 and flashed at ambient temperature for 3 minutes. Basecoat compositions 1-5 were then applied in two layers to the panels with a one-minute flash at ambient temperature between layers. The coated panels were then flashed at ambient temperature for 3 minutes. One layer of GEN 4 ES® clearcoat composition was applied to each panel and the panel was flashed for one minute at ambient temperature. A second layer of GEN 4 ES® clearcoat composition was then applied and the panel was then flashed for 5 minutes at ambient temperature and cured in a vertical position in a drying oven at 140°C for 30 minutes.

Panels were then analyzed for CF number and Flop. The test results are summarized in the Table 2 below.

**TABLE 2**

| Coatings over baked primer | | |
|---|---|---|
| | FLOP | CF number |
| Control Coating Example 1 | 13.00 | 47 |
| Coating Example 2 | 14.40 | 55 |
| Coating Example 3 | 15.00 | 59 |
| Coating Example 4 | 16.40 | 63 |
| Coating Example 5 | 14.8 | 42 |
| **Coatings over 3-Wet primer** | | |
| | **FLOP** | **CF Number** |
| Control Coating Example 6 | 12.5 | 45 |
| Coating Example 7 | 14.0 | 52 |
| Coating Example 8 | 13.5 | 56 |
| Coating Example 9 | 16.3 | 61 |
| Coating Example 10 | 13 | 48 |

## Preparation of Solid Color Basecoat Composition

The following ingredients were added to a suitable mixing vessel in the order given. All amounts are in parts by weight.

| | | |
|---|---|---|
| Microgel Resin | | 12.00 |
| CYMEL® 1168 | 18.92 | |
| n-butyl alcohol | 2.92 | |
| RAVEN® 5000 Ultra II Beads | 8.78 | |
| Acrylic Polymer #2 | | 7.53 |
| Barium Sulfate Pigment Dispersion | 11.55 | |
| TINUVIN® 079L | | 0.81 |
| NACURE® XP-221 | | 1.58 |

(continued)

| | | |
|---|---|---|
| TINUVIN® 328 | 1.58 | |
| Diurea Dispersion #2 | 26.50 | |
| GARAMITE® Dispersion | | 5.20 |
| Isopropanol | | 2.05 |

**Coating Example 11 (Reference example)**

A phosphatized steel panel was coated with a cathodic epoxy resin based electrodeposition primer (Cormax ® 6 ED from DuPont Company, Wilmington, DE). The resulting electrodeposition primer was cured to achieve a film build of 23 μm (microns).

The panel was then coated with a layer of primer composition, Titanium Primer 708A01244, available from DuPont, Wilmington, DE. The primed panel was flashed for 10 minutes at ambient temperature and cured in a drying oven at 140°C for 30 minutes. The panel was then cooled to ambient temperature. One layer of the Solid Color Basecoat composition was applied to the panel and the panel was flashed for 1 minute at ambient temperature. A second layer of the Solid Color Basecoat composition was then applied. The coated panel was flashed at ambient temperature for 3 minutes. One layer of GEN 4 ES® clearcoat composition was applied to the panel and the panel was flashed for one minute at ambient temperature. A second layer of GEN 4 ES® clearcoat composition was then applied and the panel was flashed for 5 minutes at ambient temperature and cured in vertical position in a drying oven at 140°C for 30 minutes.

**Coating Example 12 (Reference example)**

A phosphatized steel panel was coated with a cathodic epoxy resin based electrodeposition primer (Cormax® 6 ED from DuPont Company, Wilmington, DE). The resulting electrodeposition primer was cured to achieve a film build of 23 μm (microns).

The panel was then coated with a layer of primer composition, Titanium Primer 708A01244, available from DuPont, Wilmington, DE. The primed panel was flashed for 10 minutes at ambient temperature and cured in a drying oven at 140°C for 30 minutes. The panel was then cooled to ambient temperature. One layer of Ebony Black (Product code 648S42728, available from DuPont, Wilmington, DE) was applied to the panel and the panel was flashed for 1 minute at ambient temperature. A second layer of Ebony Black was then applied. The panel was flashed at ambient temperature for 3 minutes.

One layer of GEN 4 ES® clearcoat composition was applied to the panel and the panel was flashed for one minute at ambient temperature. A second layer of GEN 4 ES® clearcoat composition was then applied and the panel was flashed for 5 minutes at ambient temperature and cured in a vertical position in a drying oven at 140°C for 30 minutes.

**Coating Example 13 (Reference example)**

A phosphatized steel panel was coated with a cathodic epoxy resin based electrodeposition primer (Cormax® 6 ED from DuPont Company, Wilmington, DE). The resulting electrodeposition primer was cured to achieve a film build of 23 μm (microns).

The phosphatized panel was then coated with a layer of primer composition #1 and flashed at ambient temperature for 3 minutes. The panel was then coated with two layers of the Solid Color Basecoat composition with a one-minute ambient temperature flash between each layer. The panel was flash dried at ambient temperature for 3 minutes after the second layer was applied. Two layers of clearcoat composition (GEN 4 ES® clearcoat available from DuPont, Wilmington, DE) were applied to the panel with a one-minute flash between coats at ambient temperature. The panel was then flashed for 5 minutes and baked in a vertical position in a drying oven at 140°C for 30 minutes.

**Coating Example 14 (Reference example)**

A phosphatized steel panels were coated with a cathodic epoxy resin based electrodeposition primer (Cormax® 6 ED from DuPont Company, Wilmington, DE). The resulting electrodeposition primer was cured to achieve a film build of 23 μm (microns).

The phosphatized panel was then coated with a layer of primer composition #1 and flashed at ambient temperature for 3 minutes. The panel was then coated with two layers of Ebony Black (Product code 648S42728, available from DuPont, Wilmington, DE) with a one-minute ambient temperature flash between the two layers. After coating with

two layers of Ebony Black, the panel was flashed at ambient temperature for 3 minutes. Two layers of clearcoat composition (GEN 4 ES® clearcoat available from DuPont, Wilmington, DE) were applied to the panel with a one-minute flash between layers at ambient temperature. The panel was then flashed for 5 minutes at ambient temperature and cured in a vertical position in a drying oven at 140°C for 30 minutes.

The results of the CF number measurements for the solid color basecoat compositions are listed in Table 3.

**TABLE 3**

| | CF number |
|---|---|
| Coating 11 | 67.7 |
| Coating 12 | 60.0 |
| Coating 13 | 57.7 |
| Coating 14 | 51.8 |

**1 coat versus 2 coat processing**

**Basecoat composition 6**

A silver metallic basecoat composition was produced by mixing together the ingredients in a suitable mixing vessel in the order shown. All amounts are in parts by weight.

| | | |
|---|---|---|
| CYMEL® 1168 | 15.20 | |
| SOLVESSO® 100 | | 7.09 |
| Butyl acetate | | 6.13 |
| Acrylic Polymer #1 | | 7.37 |
| N-methyl-2-pyrrolidone | | 0.96 |
| TINUVIN® 079L | | 0.24 |
| TINUVIN® 328 | | 1.59 |
| NACURE® XP-221 | | 0.95 |
| GARAMITE® dispersion | | 5.51 |
| Methyl alcohol | 2.61 | |
| Aluminum dispersion | 7.33 | |
| ATA TCR 2040A Aluminum paste | | 14.72 |
| Propanol | | 4.00 |
| Diurea dispersion #2 | 26.30 | |

**Coating Examples 15-18**

**Coatings over commercial baked primer**

**Preparation of primed panels using a commercial baking primer**

Phosphatized steel panels were coated with a cathodic epoxy resin based electrocoat (CORMAX® 6 ED from DuPont Company, Wilmington, DE). The resulting electrocoat was cured to achieve a film build of 23 $\mu$m (microns).

These panels were then coated with a layer of primer composition, Titanium Primer 708A01244, available from DuPont, Wilmington, DE. Each primed panel was then flashed for 10 minutes at ambient temperature and cured in a drying oven at 140°C for 30 minutes. The panels were then cooled to ambient temperature.

**Coating 15 (Comparative)**

**Single coating over baked primer**

A single layer of Silver Birch basecoat (a polyester based basecoat composition available from DuPont as 647A 0111) was spray applied on a previously primed steel panel (prepared above). After coating, the panel was flashed for 3 minutes at ambient temperature. Two layers of clearcoat composition (GEN 4 ES® clearcoat available from DuPont, Wilmington, DE) were applied to the panel with a one-minute flash period between coats at ambient temperature. The panel was flashed for 10 minutes at ambient temperature and cured in a vertical position in a drying oven at 140°C for 20 minutes.

**Coating 16 (Control)**

**Two layer coating over baked primer**

Silver Birch basecoat composition was applied on a previously primed steel panel (prepared above). The panel was flashed for 3 minutes at ambient temperature and a second coat of Silver Birch basecoat was applied. After a 3 minute flash at ambient temperature, two layers of clearcoat composition (GEN 4 ES® clearcoat available from DuPont, Wilmington, DE) were applied to the panel with a one-minute flash period between coats at ambient temperature. The panel was flashed for 10 minutes at ambient temperature and cured in a vertical position in a drying oven at 140°C for 20 minutes.

**Coating 17**

Basecoat composition 6 was applied on a previously prepared primed steel panel (prepared above). The panel was flashed for 3 minutes at ambient temperature. Two layers of clearcoat composition (GEN 4 ES® clearcoat available from DuPont, Wilmington, DE) were applied to the panel with a one-minute flash period between coats at ambient temperature. The panel was flashed for 10 minutes at ambient temperature and cured in a vertical position in a drying oven at 140°C for 20 minutes.

**Coating 18**

Basecoat composition 6 was applied on a previously prepared primed steel panel (prepared above). The panel was flashed for 3 minutes at ambient temperature and a second coat of Basecoat composition 6 was applied. After a 3 minute flash at ambient temperature, two layers of clearcoat composition (GEN 4 ES® clearcoat available from DuPont, Wilmington, DE) were applied to the panel with a one-minute flash period between coats at ambient temperature. The panel was flashed for 10 minutes at ambient temperature and cured in a vertical position in a drying oven at 140°C for 20 minutes.

**Preparation of 3-Wet Primed Panels**

Phosphatized steel panels were coated with a cathodic epoxy resin based electrocoat (CORMAX® 6 ED from DuPont Company, Wilmington, DE). The resulting electrocoat was cured to achieve a film build of 23 μm (microns). Each panel was then coated with 3-Wet primer composition and flashed at ambient temperature for 3 minutes to remove a portion of the solvent.

Coating 19

A 3-wet primed panel (prepared above) was coated with 1 coating of basecoat composition 6 and flashed for 3 minutes at ambient temperature. Two layers of clearcoat composition (GEN 4 ES® clearcoat available from DuPont, Wilmington, DE) were applied to the panel with a one-minute flash period between coats at ambient temperature. The panel was flashed for 2 minutes at ambient temperature and placed in a drying oven at 93°C in a vertical position. The temperature in the drying oven was increased to 140°C over an 8 minute period. The panel was then kept at 140°C for 12 minutes.

**Coating 20**

A 3-wet primed panel (prepared above) was coated with two coats of basecoat composition 6 with a 3 minute

flash at ambient temperature between applications. The panel was then flashed for 3 minutes and two layers of clearcoat composition (GEN 4 ES® clearcoat available from DuPont, Wilmington, DE) were applied to the panel with a one-minute flash period between coats at ambient temperature. The panel was flashed for 2 minutes at ambient temperature and placed in a drying oven at 93°C in a vertical position. The temperature in the drying oven was increased to 140°C over an 8 minute period. The panel was then kept at 140°C for 12 minutes.

The results of these panels are summarized in Table 4.

**TABLE 4**

| Coating Example | Flop | CF Number |
|---|---|---|
| 15 (comparative) | 9.48 | 51.0 |
| 16 (control) | 12.05 | 50.5 |
| 17 | 11.21 | 53.2 |
| 18 | 13.19 | 50.1 |
| 19 | 10.65 | 50.2 |
| 20 | 12.81 | 51.1 |

## Claims

1. A coating composition comprising a metallic effect pigment, a crosslinkable component, a crosslinking component, at least one diurea compound and at least one layered silicate mineral.

2. The coating composition of claim 1 wherein said at least one layered silicate mineral comprises an aluminum magnesium silicate mineral treated with at least one quaternary amine.

3. The coating composition of claim 1 wherein said at least one diurea compound is a reaction product of benzyl amine and 1,6-hexamethylene diisocyanate.

4. The coating composition of claim 1 wherein the coating composition is a solvent-borne coating composition.

5. The coating composition of claim 1 wherein said crosslinkable component is an acrylic polyol comprising at least 40 percent by weight based on the total weight of the acrylic polyol of a combination of at least one linear or branched C8 or higher alkyl acrylate monomer and a second monomer that is a polyester-extended acrylate monomer.

6. The coating composition of claim 1 wherein the crosslinking component comprises a crosslinking agent selected from the group consisting of melamine, an aminoplast resin, a polyisocyanate, a blocked polyisocyanate, and a mixture thereof.

## Patentansprüche

1. Beschichtungszusammensetzung umfassend ein Metallic-Effekt Pigment, eine vernetzbare Komponente, eine Vernetzungskomponente, mindestens eine Diharnstoff Verbindung und mindestens ein geschichtetes Silicatmineral.

2. Beschichtungszusammensetzung nach Anspruch 1, wobei das mindestens eine geschichtete Silicatmineral ein Aluminium-Magnesium-Silicatmineral umfasst, das mit mindestens einem quaternären Amin behandelt wurde.

3. Beschichtungszusammensetzung nach Anspruch 1, wobei die mindestens eine Diharnstoff-Verbindung ein Reaktionsprodukt von Benzylamin und 1,6-Hexamethylendiisocyanat.

4. Beschichtungszusammensetzung nach Anspruch 1, wobei die Beschichtungszusammensetzung eine Lösungsmittel-basierte Beschichtungszusammensetzung ist.

5. Beschichtungszusammensetzung nach Anspruch 1, wobei die vernetzbare Komponente ein acrylisches Polyol ist,

umfasssend mindestens 40 Gew.-% basierend auf dem Gesamtgewicht des acrylischen Polyols einer Kombination von mindestens einem geradlinigen oder verzweigten C8 oder höheren Alkylacrylat-Monomers und einem zweiten Monomer, das ein Polyester-gestrecktes Acrylatmonomer ist.

**6.** Beschichtungszusammensetzung nach Anspruch 1, wobei die Vernetzungskomponente ein Vernetzungsmittel umfasst ausgewählt aus der Gruppe bestehend aus Melamin, einem Aminoplast-Harz, einem Polyisocyanat, einem blockierten Polyisocyanat und einer Mischung davon.

## Revendications

**1.** Composition de revêtement comprenant un pigment à effet métallique, un composant réticulable, un composant réticulant, au moins un composé diurée et au moins un minéral silicate stratifié.

**2.** Composition de revêtement selon la revendication 1, dans laquelle ledit au moins un minéral silicate stratifié comprend un minéral silicate d'aluminium et de magnésium traité avec au moins une amine quaternaire.

**3.** Composition de revêtement selon la revendication 1, dans lequel ledit au moins un composé diurée est un produit de réaction d'amine de benzyle et de 1,6-hexaméthylène diisocyanate.

**4.** Composition de revêtement selon la revendication 1, la composition de revêtement étant une composition de revêtement à base de solvant.

**5.** Composition de revêtement selon la revendication 1, dans laquelle ledit composant réticulable est un polyol acrylique comprenant au moins 40% en poids sur la base du poids total du polyol acrylique d'une combinaison d'au moins un monomère d'alkylacrylate linéaire ou ramifié égal ou supérieur à C8 et un deuxième monomère qui est un monomère d'acrylate dilué dans un polyester.

**6.** Composition de revêtement selon la revendication 1, dans laquelle le composant réticulant comprend un agent de réticulation sélectionné dans le groupe constitué de la mélamine, d'une résine aminoplaste, d'un polyisocyanate, d'un polyisocyanate bloqué, et d'un mélange de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6863929 B, Watanabe
- JP 10140083 A
- JP 56022363 A
- US 2007024832 W
- WO 2008070076 A2
- US 6652915 B
- EP 0594142 B1
- EP 0719795 B1